# EUROPEAN PATENT SPECIFICATION

(11) **EP 4 107 819 B1**
(45) Date of publication and mention of the grant of the patent: **27.08.2025**
(21) Application number: 20717349.3
(22) Date of filing: 18.02.2020
(51) Int. Cl.: H01R 13/533, H01R 13/527, H02G 3/08, F16J 15/10, H01R 13/66, H01R 101/00

(54) **ASSEMBLIES, COMPONENTS, AND METHODS FOR CREATING A FLAMEPROOF OR EXPLOSION PROOF BARRIER**
BAUGRUPPEN, BAUTEILE UND VERFAHREN ZUR HERSTELLUNG EINER FLAMMFESTEN ODER EXPLOSIONSSICHEREN BARRIERE
ENSEMBLES, COMPOSANTS ET PROCÉDÉS DE CRÉATION D'UNE BARRIÈRE PARE-FLAMMES OU ANTIDÉFLAGRANTE

(43) Date of publication of application: 28.12.2022
(60) Divisional application: 23169138.7
(73) Proprietor: Micro Motion, Inc., Boulder, CO 80301 (US)
(72) Inventor: PAVOL, Eric, Arvada, Colorado 80007 (US); JAMES, Clayton T., Longmont, Colorado 80501 (US); SHANAHAN, Shaun E., Denver, Colorado 80211 (US); DESHPANDE, Atul Vasant, Kalyan Pune 411037 (IN); SOHM, Howard Irving Jr., Longmont, Colorado 80501 (US)
(74) Representative: Ellis, Christopher Paul
(86) International application number: PCT/US2020/018559
(87) International publication number: WO 2021/167589

(56) References cited:
- WO-A1-2013/172846
- WO-A1-93/25867
- WO-A2-2015/054289
- CN-B- 102 904 103
- US-A- 5 377 747
- US-A1- 2003 010 136

## Description

### TECHNICAL FIELD

The embodiments described below relate to barriers, more particularly, to explosion protected barriers.

### BACKGROUND

Forming explosion proof and/or flameproof barriers certified to satisfy Ex d and/or Ex e International Electrotechnical Commission (hereinafter, "IEC") standards (these barriers hereinafter referred to as "standard barriers") presents a number of challenges, especially when using components that have different coefficients of thermal expansion (hereinafter, "CTEs"), materials of different malleability or stiffnesses, and geometric configurations. To comply with standards, the gaps between barriers that allow gasses through as well as length of flame paths may be limited to certain specific parameters that vary with the size and nature of the barrier and the environment to which the barrier is exposed in order to be certified.

Currently, the state of the art in generating standard barriers, especially when using components made of materials like stainless steel, Aluminum, and C22, has the barrier formed by a composite that changes from liquid to a solid state, for instance, an epoxy. The problem with these methods is that the barrier formed is often uneven and inconsistent, resulting in failure of the barrier in explosion scenarios. Further, compliance with standards for Ex d and Ex e qualifications for barriers generated with liquid polymers requires that the barrier comply with specific standards before and after polymer aging. Standard barriers with cylindrical joints made with solid polymers only require that the barrier satisfy standards after aging is conducted, simplifying and expediting manufacture and compliance procedures. Accordingly, there is a need for methods, components, and/or assemblies to form standard barriers using solid polymers.

US Patent Application no. 2003/0010136 A1, for example, discloses a flowmeter having an insulating compound as a barrier. Chinese Patent no. 102904103B discloses a sealing material defining a feedthrough device for harsh environmental conditions. PCT publication no. WO 93/25867 discloses a grommet engaged as an interference fit in an aperture. PCT publication no. WO 2013/172846 discloses a seal between a body portion and an inner surface of an aperture. PCT publication no. WO 2015/0542989 A2 discloses an electrical feedthrough for a compressor having wires sealed therein. US Patent no. 5377747 A1 discloses an explosion proof feedthrough for an oil well-head.

Existing methods fail to use interference fit members to create interference fit standard barriers. An interference fit can be, for instance, one or more of a press fit and a friction fit. Existing potential barrier members that could be used to generate a press fit standard barrier are often manufactured (e.g. barrier members) with substantially consistent edges about the members' peripheries that would be coupled by interference fit to the interior of an aperture also having substantially consistent, straight edges. Correspondingly, receiving apertures are also manufactured with relatively consistent, straight edges. The manner in which this interference fit would be accomplished is by pressing the member into the confined volume of the aperture such that the member expands to fill any gaps between the member and the confining aperture. Pressure may be applied from both a top and bottom, or from the top with a flat and complete pressure resistance element in order to force the volume of the member into the aperture. This method causes significant loading on the top pressing plate and/or the opposing element, and this can lead to unnecessary pressure on the element having the aperture, for instance, the element with the aperture being a housing of a vibratory sensor. Also, the member stores potential energy associated with the compression that can eventually lead to failure. **In** the context of creating flameproof and explosion proof devices, the resulting barrier fails to contain combusted gases effectively, so it cannot qualify as a standard barrier. Part of this can be attributed to material of the barrier member moving asymmetrically due to stored stress. Also, these methods require a significant quantity of energy to facilitate the appropriate application of pressure and result in an unreliable barrier. Barrier members should be such that manufacture should be made simpler and more streamlined, using less energy in production. Accordingly, there is a need for a barrier member and/or receiving aperture with geometry that can improve elements of the method of production and the quality of the resulting standard barrier.

Creating an interference fit standard barrier by interference fitting an exterior edge of a barrier member with an interior edge of an aperture is complicated when using existing elements. If the barrier member is made of materials with relatively high coefficients of friction (e.g. stainless steel or C22) when interacting with common elements of common or similar composition, significant stress can build and can harm a passthrough element that passes through the barrier member. The friction can also cause a failure of the barrier that may negate the explosion or flameproof specification of the interference fit standard barrier and/or the assembly containing the barrier. This can be especially problematic in the context of flow sensors where ambient conditions such as temperature can vary dramatically during operation. Also, the barrier member composed of a stiff material with limited malleability will limit the range of operating conditions in which the barrier can operate. Also, when using polymers for an interference fit standard barrier, the polymers may have sufficient resistance to extreme temperatures and reactive chemicals. Existing components are not specifically configured for this purpose, and they may not be easily adaptable for the purpose of forming an interference fit standard barrier. For instance, existing polymer bushings typically are tiered with discontinuous levels and round shaped interior channels that are poorly adapted to accepting passthrough members such as printed circuit boards (hereinafter, "PCBs"). Accordingly, there is a need for a member composed of a material that can facilitate interference fit standard barriers over a wide range of conditions.

The standard barriers often have elements passing through them, such that the elements passing through may be avoided or accounted for when creating an interference fit between components. These passthrough elements often have some elements appropriate for one side of the standard barrier and other elements appropriate for the other side of the standard barrier. In some contexts, for instance, in the housing of a flowmeter electronics, specialized press blocks are used as flat substrates (on the end receiving the pressure from the press) to receive pressure from a press to make an interference fit seal. While the end of the press block that receives the pressure from the press is flat, the other end often has recesses to accept components of a passthrough element that protrude from the standard barrier after pressing, the recesses provided in order that pressure is not significantly received by the protruding and often relatively fragile passthrough elements. This effectively leaves the protruding elements relatively intact when pressure is applied through the other end of the block to form the interference fit barrier from the compression. The side of the press block with the recesses exerts higher pressure against the bushing that is being pressed by the press block because of the recesses (due to lower contact surface area). Also, the pressure may be applied unevenly in places with the recesses, as the recesses are often asymmetric in a relevant dimension. This asymmetric distribution of pressure causes uneven barriers, potentially leading to failure of the barriers in electronics housings from a flame and/or explosion. Accordingly, there is a need for pre-press assemblies, components, and/or methods for distributing this pressure evenly.

No effective solution for creating an interference fit standard barrier with a passthrough element in an apparatus (e.g. a vibratory sensor transmitter, housing of a vibratory sensor transmitter, a vibratory sensor, or a housing of a vibratory sensor) composed largely of a rigid material like stainless steel has been discovered. Accordingly, there is need for an assembly, components, and/or methods that use rigid or hard materials like stainless steel as a part of an interference fit standard barrier with a passthrough element.

### SUMMARY

An assembly with an interference fit standard barrier forming an explosion proof and/or flame proof barriers certified to satisfy Ex d and/or Ex e International technical Commission standards comprises an aperture in an element and a barrier member comprising a first face, a second face, a peripheral edge between the first face and the second face, the peripheral edge being at least partially angled by an angle relative to a barrier reference line that is perpendicular to both of at least part of the first face and at least part of the second face, the angle declining from the first face to the second face. The barrier member may further have an interior channel extending through a member depth of the barrier member, the member depth being between the first face and the second face, the interior channel having a longer length than width in a surface of the first face and a surface of the second face, wherein the barrier member is composed of a polymer; and wherein the aperture comprises an interior peripheral edge conformal with the peripheral edge of the barrier member.

### ASPECTS

According to an aspect, an assembly with an interference fit standard barrier forming an explosion proof and/or flame proof barriers certified to satisfy Ex d and/or Ex e International technical Commission standards comprises an aperture in an element and a barrier member comprising a first face, a second face, a peripheral edge between the first face and the second face, the peripheral edge being at least partially angled by an angle relative to a barrier reference line that is perpendicular to both of at least part of the first face and at least part of the second face, the angle declining from the first face to the second face. The barrier member may further have an interior channel extending through a member depth of the barrier member, the member depth being between the first face and the second face, the interior channel having a longer length than width in a surface of the first face and a surface of the second face, wherein the barrier member is composed of a polymer; and wherein the aperture comprises an interior peripheral edge conformal with the peripheral edge of the barrier member.

Preferably, the barrier member is at least partially composed of a fluorocarbon. Preferably the fluorocarbon is polytetrafluoroethylene (PTFE).

### BRIEF DESCRIPTION OF THE DRAWINGS

The same reference number represents embodiments of the same element in all drawings. It should be understood that the drawings are not necessarily to scale.
**FIG. 1** shows a bisected view of an embodiment of a post-press assembly 100 having an interference fit standard barrier 199.
**FIG. 2A** shows a perspective view of an embodiment of a pre-press assembly 200 prepared for pressing.
**FIG. 2B** shows an exploded view of the embodiment of the pre-press assembly 200 presented in FIG. 2A.
**FIG. 2C** shows a bisected side view of an embodiment of a pre-press assembly 200.
**FIG. 3** shows a perspective view of an embodiment of a barrier member 102 for forming an interference fit standard barrier 199.
**FIG. 4** shows a perspective view of an embodiment of a pre-engagement assembly 400 before the barrier member 102 is engaged with the aperture 104.
**FIG. 5** shows a perspective view of an embodiment of a secured assembly 500 after a pressure distribution element 108 is coupled to a first surface 152.
**FIG. 6** shows a flowchart of an embodiment of a method 600 of forming a component with an interference fit standard barrier 199.
**FIG. 7** shows a flowchart of an embodiment of a method 700 of forming a barrier member 102.
**FIG. 8** shows a flowchart of an embodiment of a method 800 of engaging elements to form a pre-press assembly 200.
**FIG. 9** shows a flowchart of an embodiment of a method 900 of pressing a pre-press assembly 200 to form a post-press assembly 100.
**FIG. 10** shows a block diagram of an embodiment of a system 1000 having an interference fit standard barrier 1099.

### DETAILED DESCRIPTION

In order to make a barrier member that can be used in an interference fit standard barrier, the barrier member may be composed of a material that is sufficiently heat and flame resistant to qualify. Further, in embodiments in which the interference fit standard barrier is to have a passthrough element pass through the barrier, the material of the barrier member should be such that the barrier member accommodates and safeguards the integrity of the passthrough element. If the barrier member has a passthrough element positioned in an interior passage of the barrier member, and the barrier member is to be pressed in order to form an interference fit barrier within an aperture, the materials should have a sufficiently low coefficient of friction over a wide range of conditions in order to prevent damage to the passthrough element during the compression. For instance, the coefficient of friction of the interaction between the material of which the barrier member is composed and the material of which the element that has the aperture is composed when interacting may be below a predetermine threshold. In an embodiment, the static, dry and clean coefficient of friction of the interaction between the material of which the barrier member is composed and the material of which the element that has the aperture is composed is less than 0.2 or is in a range between 0.04 and 0.2 (at standard temperature of 273.15 degrees Kelvin and standard pressure 101.6 kilopascals, hereinafter "STP"). Further, the malleability of the barrier member material should be such that the barrier member can be pressed relatively easily. Also, the capacity of the barrier member material to store elastic potential energy should be such that the interference fit standard barrier can be maintained (while complying with the relevant standard) in a variety of conditions. Because polymers have relatively high coefficients of thermal expansion, the barrier members composed of polymeric materials tend to significantly expand and contract with temperature changes. In applications like flowmeter transmitters, the barrier will potentially be exposed to significantly varying conditions that will cause these expansions and contractions. In order to counteract the expansions and contractions that the polymeric barrier member will experience due to conditions in its environment and/or flow material, the barrier member may store sufficient elastic potential energy from the original compression that forms the interference fit standard barrier to correspondingly expand (in response to a contraction), releasing some of the elastic potential energy, or compress (in response to an expansion), storing further elastic potential energy. Further, in the context of flame and explosion proofing, materials used should be sufficiently resistant to combustion and other reactions, so a polymer that is strongly inert is preferred. A number of polymers are sufficiently malleable, are sufficiently inert, have sufficiently low coefficients of friction when interacting with traditional materials (such as those used in electronics compartments and/or vibratory sensors or transmitters), and have sufficient capacity to store elastic potential energy to be used in barrier members to form interference fit standard barriers by interference fit of barrier members. One polymeric material with these properties is polytetrafluoroethylene (hereinafter, "PTFE").

To make this interference fit standard barrier, a specialized set of components, manufacturing assembly, and method may be useful. For instance, in order to reduce the amount of pressure needed to form the interference fit barrier and to make a more even and secure interference fit standard barrier, an exterior edge of a barrier member that is to engage an aperture by interference fit may be tapered to provide resistance to compression without completely preventing the member from deforming through the aperture (as would be the case if a completely sealed opposing plate were used). The aperture may also correspondingly have an interior tapering with a portion that substantially conforms to the exterior edge tapering of the barrier member, with further narrowing to provide an opposing force to the pressure applied to make the interference fit. In this embodiment, the pressure applied may force elastic deformation of the barrier member, such that a portion of the barrier element will fit into a portion of the aperture that would otherwise be too narrow to receive the undeformed barrier member. By allowing the barrier member to deform in this manner relieves some of the stored elastic forces in the barrier member material that could be translated in a direction that would cause failure of the interference fit standard barrier. Also, by not providing a flat opposing member to oppose the force applied to the barrier member on the side of the barrier opposite the side where pressure is applied, less pressure needs to be applied to cause the desired deformation with the desired level of elastic potential energy (to compensate for expansions and contractions of the barrier member material). Some of the pressure is translated into the deformation of the barrier member to further conform to the narrower interior edge of the aperture into which the interference fit is being formed.

The barrier may be manufactured using a number of specialized implements. For instance, a specialized press block may be used to apply the pressure that results in the interference fit standard barrier. The press block may be especially machined to accommodate a passthrough element that would be passed through the barrier member (and, hence, the resulting interference fit standard barrier). When pressing to form the interference fit standard barrier, the coupling between the passthrough element is also interference fit to the passthrough element. If the block simply put pressure on the passthrough element, the pressure applied may damage the passthrough element. Having a press block that accommodates the passthrough element and applies most of the pressed force either directly or indirectly to the barrier member can spare the passthrough element.

Of course, such a press block may have recesses to accommodate the passthrough element. These recesses may cause an uneven distribution of the compressive forces, such that the barrier element will not be compressed evenly, causing an imbalanced barrier that is prone to failure. A distribution plate can be placed between the press block and the barrier member to facilitate a more even application of pressure to the barrier member, assuring a more uniform interference fit standard barrier. This pressure distribution element can also be incorporated as a permanent element of the barrier after the compression is done, such that it further reinforces the barrier. This may add an extra layer of security to assure the barrier remains in place in the event of a pressure spike (for instance, from a significant explosion).

In order to ensure that the elements to be pressed by a press are aligned correctly, guide pins may be positioned such that specialized channels in one or more of the press block and the pressure distribution element receive the guide pins and have a set alignment assuring that all of the elements are in place. If there is a passthrough element, there may be an opposing assembly on the side opposite the side where compression is applied such that the passthrough element is positioned by the opposing assembly and the conformal recesses of the press block. The opposing assembly may be a removable element, such that the opposing assembly is only an element of the invention during the application of pressure that forms the interference fit standard barrier.

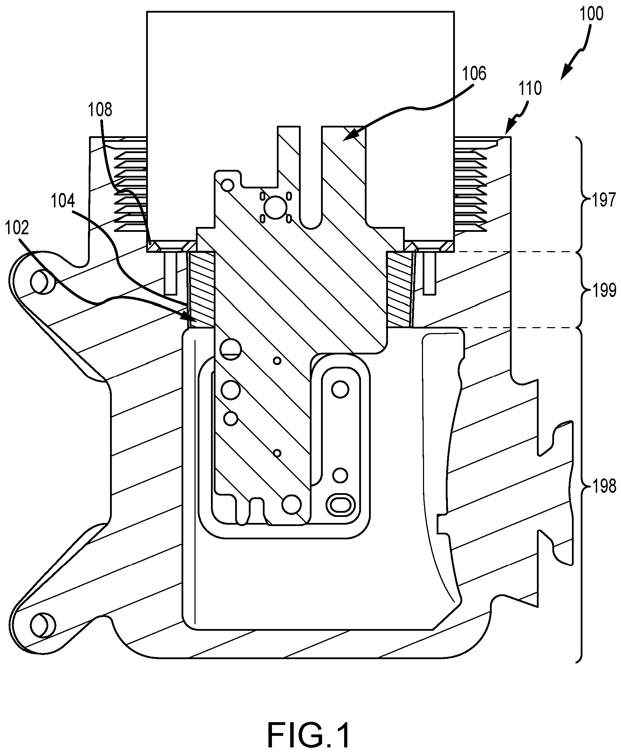

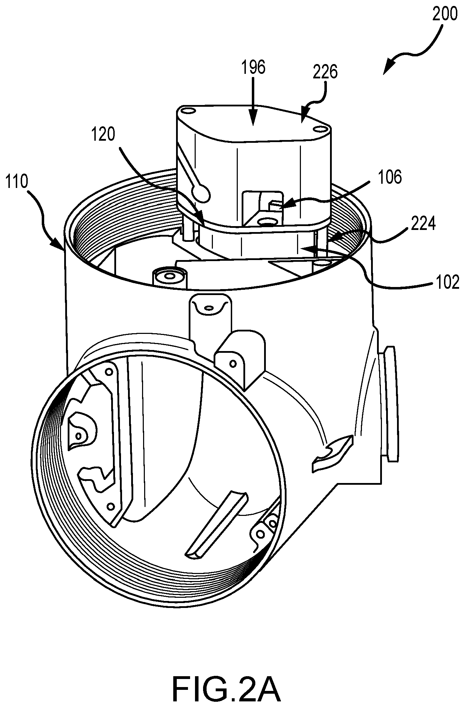

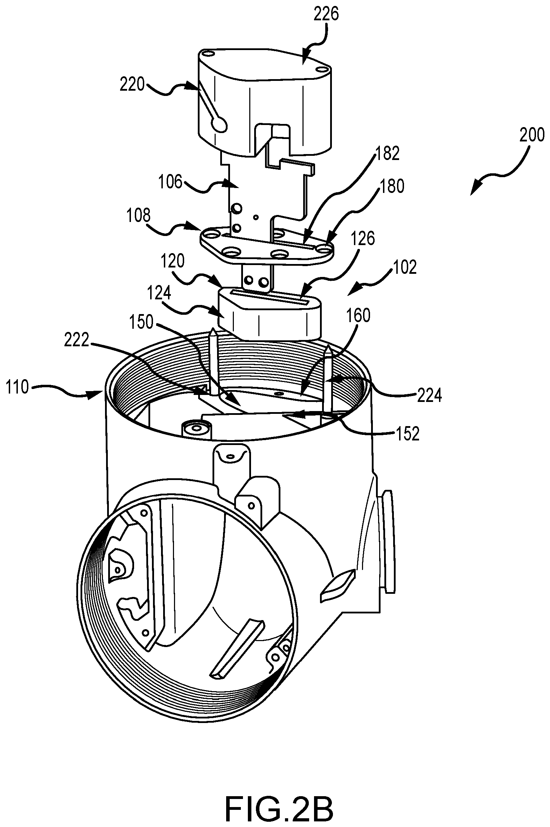

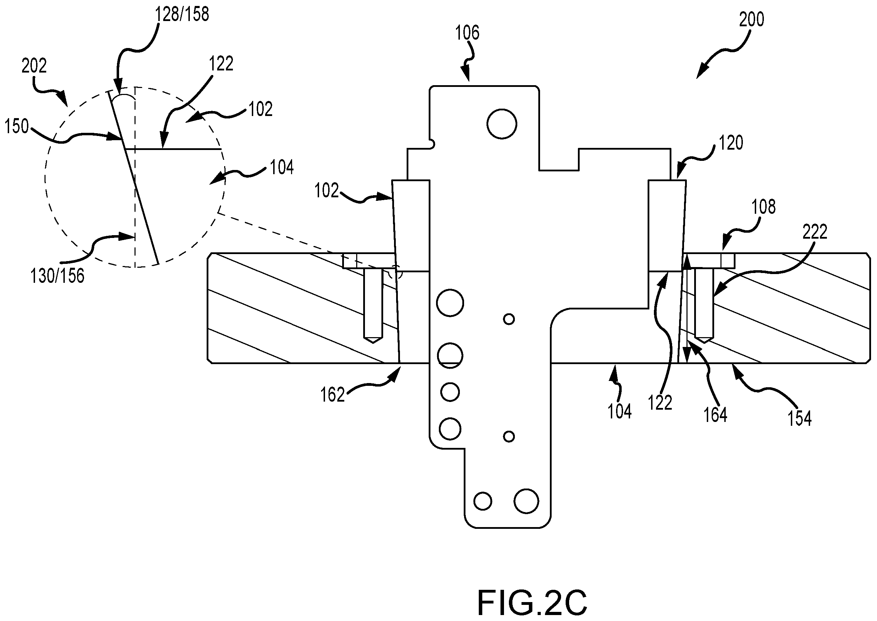

**FIG. 1** shows a bisected view of an embodiment of a post-press assembly 100 having an interference fit standard barrier 199. In the embodiment shown, the post-press assembly 100 has already undergone pressing to form the interference fit standard barrier 199, such that the post-press assembly 100 may be considered a post-press assembly 100. The post-press assembly 100 may include a barrier member 102, an aperture 104, a passthrough element 106, a pressure distribution element 108, and a housing 110. Assemblies before pressing may be called pre-press assemblies 200. **FIG. 2A** shows a perspective view of an embodiment of a pre-press assembly 200 prepared for pressing. **FIG. 2B** shows an exploded view of the embodiment of the pre-press assembly 200 presented in FIG. 2A. **FIG. 2C** shows a bisected side view of an embodiment of a pre-press assembly 200. In various embodiments, the pre-press assembly 200 may have a barrier member 102, an aperture 104, a passthrough element 106, a pressure distribution element 108, and a press block 220. Elements described with respect to FIGs. 2A, 2B, and 2C that have the same reference numbers as FIG. 1 are embodiments of those elements described with respect to FIG. 1 before pressing. The pre-press assembly 200 and post-press assembly 100 may be collectively referred to as assemblies 100 and/or 200. In an embodiment, the post-press assembly 100 may be a component of a housing 110 for a transmitter that is adapted and/or configured to communicate with a flow sensor.

Various embodiments of an interference fit standard barrier 199 are contemplated, for instance ones that are contained in housings of transmitters or contained in other enclosures with electronic components. The post-press assembly 100 may have an interference fit standard barrier 199 that complies with standards of a recognized standards setting organization trusted by those skilled in the art, for instance, one or more of IEC "Ex d" and "Ex e" standards. The Ex d standard is a "flameproof standard." The Ex e standard is an "explosion protected standard" with "increased safety." The IEC has separate sets of requirements for both of the Ex d and Ex e standards. These standards are merely exemplary. Other standards in the industry for interference fit standard barriers 199 are contemplated. The interference fit standard barrier 199 may be formed by interference fit of the barrier member 102 with one or more of the aperture 104 and the passthrough element 106. This embodiment of the interference fit standard barrier 199 may be called an interference fit standard barrier 199. The interference fit standard barrier 199 may be such that it satisfies requirements of the IEC for Ex e and Ex d standards for gaps between elements as well as lengths of flame paths. For instance, the gaps may have gap depths that are less than a predetermined gap depth. In an embodiment, the gaps may have gap depths that are less than one of 0.13mm and 0.02mm. In an embodiment, the interference fit standard barrier 199 may have flame paths that are less than a predetermined threshold.

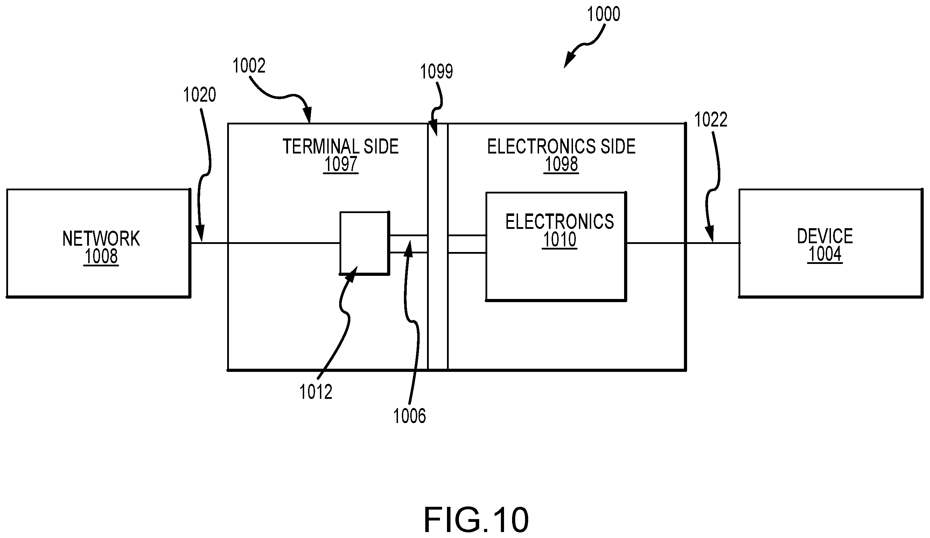

In an embodiment, the interference fit standard barrier 199 may have a first side 197 and a second side 198. In an embodiment, the first side 197 is a terminal side (e.g. terminal side 1097 of FIG. 10) with electronic communication elements that communicate with a first system, perhaps a network (e.g. network 1008 of FIG. 10). In an embodiment, the second side 198 is an electronics side (e.g. electronics side 1098 of FIG. 10) with electronic components that may do one or more of store data, receive data, transmit data, process data, interpret data, display data, and the like. In an embodiment, the electronics side (e.g. electronics side 1098 of FIG. 10) may have electronics in communication with a vibratory sensor. In an embodiment, the shape of one or more of the barrier member 102 and the aperture 104 may be dictated by components to be installed on the electronics side (e.g. electronics side 1098 of FIG. 10). An embodiment of a system 1000 with a terminal side 1097 and an electronics side 1098 of an interference fit standard barrier 199 is shown in FIG. 10.

Embodiments presented in this specification show various arrangements of elements of an interference fit standard barrier 199 in the context of a post-press assembly 100 and pre-press assembly 200. While the post-press assembly 100 and pre-press assembly 200 are described in the present application within an embodiment of a flow sensor transmitter communicating with an outside network, the embodiment is not intended to be limiting. Those of skill will readily understand that the post-press assembly 100 and pre-press assembly 200 may be further used in other applications.

The barrier member 102 is an element that is deformed by pressure to generate an interference fit to form the interference fit standard barrier 199. The barrier member 102 may be pressed using, for instance, a press, to deform the barrier member 102 to conform to one or more of an aperture 104 and a passthrough element 106 to form the interference fit standard barrier 199. The pressure may be applied in a pressure direction 196, perhaps in a direction from a first side 197 to a second side 198. The barrier member 102 may have a first face 120, a second face 122, and a peripheral edge 124. In an embodiment, the first face 120 and the second face 122 are on opposing sides of the barrier member 102, with the peripheral edge 124 being between the first face 120 and the second face 122. In an embodiment, the first face 120 and/or the second face 122 may be substantially flat and may have substantially parallel surfaces, with a relatively consistent thickness of the barrier member 102 between them (at least before pressing).

In an embodiment, the peripheral edge 124 may be tapered (before and/or after pressing) such that the barrier member 102 has greater volume near the first face 120 than near the second face 122. In an embodiment, this may mean that the first face 120 has greater surface area than the second face 122. In an embodiment, the taper along the peripheral edge 124 is a substantially flat edge at an angle 128. In an embodiment, the angle 128, as measured from a barrier reference line 130 drawn from the first face 120 to the second face 122 that is perpendicular to both the first face 120 and the second face 122 is less than a magnitude of 5 degrees. In another embodiment, the angle 128 is less than or equal to a magnitude of 2 degrees with respect to the same barrier reference line 130. It should be appreciated that positive and negative angles are only with respect to a reference, so the magnitude is presented here. The peripheral edge 124 may be such that it is configured to partially conform to a conformal portion of an interior of the aperture 104. In an embodiment, the peripheral edge 124 is of a shape that is configured to at least partially conform to a conformal portion of the interior of the aperture 104. It should be appreciated that the peripheral edge 124 may be flat, may be angled, may be curved, may have one or more of flat, angled, and curved portions, and/or the like. In a different embodiment, the peripheral edge 124 may be flat and perpendicular to both the first face 120 and the second face 122.

In an embodiment, the overall shape of the barrier member 102 may be dictated by the space occupied by other components in the assembly. In an embodiment, the shape of the barrier member 102 may not be cylindrical. In an embodiment, the shapes of the first and second faces 120 and 122 may not be circular and may be the same or different. For instance, the shape of the first and second faces 120 and 122 may be of a triangle, perhaps having rounded corners. This may be described as a curved triangle for the purposes of this specification. The volume and cross section of the barrier member 102 may narrow from the first face 120 to the second face 122, such that the resulting three-dimensional shape of the barrier member 102 can be characterized as a narrowing curved triangle. In an embodiment, the barrier member 102 may have a bulge. This bulge may be used to close an aperture 104 that has extra room to accommodate a connector for a passthrough element 106. In an embodiment, the peripheral edge 124 may be uniform between the first face 120 and the second face 122 such that the overall shape of the barrier member 102 is consistently one shape that narrows at the edges from the first face 120 to the second face 122, for instance, in a shape of a narrowing curved triangle (the narrowing perhaps from the first face 120 to the second face 122).

In an embodiment, the barrier member 102 may need to accommodate a passthrough element 106. The passthrough element 106 may extend through the barrier member 102 and, hence, the interference fit standard barrier 199. The barrier member 102 may have an interior channel 126 to accommodate the passthrough element 106. Before pressing to form the interference fit standard barrier 199, the interior channel 126 may have sufficient space to receive the passthrough element 106. During compression, this interior channel 126 may be compressed around the passthrough element 106, perhaps forming an interference fit coupling with the passthrough element 106. In an alternative embodiment, the passthrough is coupled to the interior of the barrier member 102 prior to pressing, such that the interior channel 126 is superfluous or has already been filled by the passthrough element 106, and, perhaps, appropriately sealed.

In an embodiment, the barrier member 102 may be composed of a material that has properties that are desirable for making an interference fit standard barrier 199. For instance, the material may one or more of be sufficiently malleable, be sufficiently inert, have sufficiently low coefficients of friction when interacting with traditional materials, be tolerant of large temperature swings (not too brittle at extreme cold temperatures or melt at high temperatures), and have sufficient capacity to store elastic potential energy to be used in an interference fit standard barrier 199. For instance, the barrier member 102 may be composed of a material that has a predetermined one or more of maximum elasticity, minimum coefficient of friction when interacting with conventional materials, maximum melting point at standard temperature and pressure, minimum combustion point, minimum autoignition temperature, minimum inertness, minimum tendency to absorb fluids such as water, at particular operating temperatures. These specifications may be with respect to a predetermined threshold. In an embodiment, the barrier member 102 may be composed of materials that have characteristics selected to maintain differences relative to the characteristics of materials from which the aperture 104 is composed. Alternatively, the barrier member 102 may be composed of polymers selected to have a particular set of properties at a particular set of conditions (e.g. temperature and pressure). For instance, the barrier member 102 (and/or peripheral edge 124) may be composed of a polymer that is one or more of more malleable than, that has a lower Young's modulus of elasticity, and has a higher Poisson's ratio than the material of which the aperture 104 (and/or the conformal interior peripheral edge 150) is composed. In an embodiment, the barrier member 102 may be composed of a polymer, for instance, a fluorocarbon or fluoropolymer. Examples of fluorocarbons that may be used may include PTFE, polyvinylfluoride (hereinafter, "PVF"), polyvinylidene fluoride (hereinafter, "PVDF"), polychlorotrifluoroethylene (hereinafter, "PCTFE"), polyethylenechlorotrifluoroethylene (hereinafter, "ECTFE"), ethylene tetrafluoroethane (hereinafter, "ETFE"), perfluoro methyl alkoxy (hereinafter, "MFA"), perfluoro alkoxy alkane (hereinafter, "PFA"), fluorinated ethylene propylene (hereinafter, "FEP"), perflourinated elastomer (hereinafter, "FFPM"), chlorotrifluoroethylenevinylidene fluoride (hereinafter, "FPM"), tetrafluoroethylene-propylene (hereinafter, "FEPM"), perfluoropolyether (hereinafter, "PFPE), perfluorosonic acid (hereinafter, "PFSA"), perfluoropolyoxetane, and/or the like.

The aperture 104 is an aperture in an element of the assemblies 100 or 200 that receives a barrier member 102 to form an interference fit standard barrier 199. The aperture 104 is a hole or channel through a part of the assemblies 100 or 200. In an embodiment, the aperture 104 may be an element of a housing 110. The aperture 104 is configured to be blocked by receiving a barrier member 102 to form the interference fit standard barrier 199. The aperture 104 may further be configured to be large enough to receive a connector for electronics that may be provided on the passthrough element 106. The aperture 104 may be surrounded by a first surface 152 and a second surface 154. The aperture 104 may have a first opening 160 and a second opening 162. In an embodiment, the first opening 160 has a larger surface area than the second opening 162. In another embodiment, the first opening 160 has the same surface area as the second opening 162.

In an embodiment, the aperture 104 has a conformal interior peripheral edge 150. For instance, at least a portion of the conformal interior peripheral edge 150 may be adapted to be conformal with at least a portion of the peripheral edge 124 of the barrier member 102, such that, when the peripheral edge 124 of barrier member 102 is engaged with the conformal interior peripheral edge 150 of the aperture 104, at least a portion of the barrier member 102 may be placed within the aperture 104 without applying any more pressure than is necessary for the positioning itself.

In an embodiment, the conformal interior peripheral edge 150 may be flat and perpendicular to first and second surfaces 152 and 154 about the aperture 104, representing a flat edge. In this embodiment, the peripheral edge 124 of the barrier member 102 may also be flat and perpendicular to its first face 120 and second face 122. In another embodiment, the conformal interior peripheral edge 150 may be angled relative to the first and second surfaces 152 and 154. For instance, the conformal interior peripheral edge 150 may be angled relative to an aperture reference line 156 drawn from the first surface 152 to the second surface 154 that is perpendicular to both the first surface 152 and the second surface 154, the line at a point of an edge of the first surface 152. The conformal interior peripheral edge 150 may have portions with complementary angles 158 that correspond to fit the angles 128 of the peripheral edge 124 of the barrier member 102. For instance, if the peripheral edge 124 has portions with an angle 128 with respect to a straight line drawn from the first face 120 to the second face 122 that is perpendicular to both the first face 120 and the second face 122 of the barrier member 102, the conformal interior peripheral edge 150 may have a complementary angle 158 (which may be the same or substantially the same as the angle 128) with respect to the barrier reference line 130. In this embodiment, the barrier reference line 130 may be parallel to and/or coincident with the aperture reference line 156. In the embodiment shown in FIG. 2C, the barrier reference line 130 and the aperture reference line 156 are coincident. The angle 128 and complementary angle 158 and the barrier and aperture reference lines 130 and 156 are shown in FIG. 2C in a magnified view 202 of the engagement between the barrier member 102 and the aperture 104 before pressing. Magnified view 202 shows a magnified portion of an embodiment of the barrier member 102 engaged with the aperture 104 before pressing. In this embodiment the angle 128 and complementary angle 158 are the same angle. Also, in this embodiment, the barrier reference line 130 and the aperture reference line 156 are the same and/or coincident. It can also be seen that the first face 120 has greater surface area than the second face 122, the first opening 160, and the second opening 162. The second face 122 has a smaller surface area than the first opening 160 but has a larger surface area than the second opening 162. The second opening 162 may have a smaller surface area than any of the first face 120, the second face 122, and the first opening 160. These surface areas may reflect the relative volumes of elements at the positions at which the first and second faces 120 and 122 are relative to the first and second openings 160 and 162. When the barrier member 102 is engaged with the aperture 104 before pressing, a portion of the barrier member 102 may fit into a portion of the aperture 104 without applying significant pressure. This may be facilitated by portions of the peripheral edge 124 and conformal interior peripheral edge 150 having conformal or corresponding portions, perhaps having edges at appropriate or substantially the same angle 128 and complementary angle 158. Other conformal arrangements are contemplated, for instance, any combination of polygonal or curvilinear surfaces that conform or correspond to one another.

In an embodiment, before pressing, the aperture 104 may have an aperture depth 164 between the first surface 152 and the second surface 154 along an aperture reference line 156 that is greater than a member depth 123 the barrier member 102 has between a first face 120 and a second face 122 along a barrier reference line 130. In various embodiments, before pressing to form the interference fit standard barrier 199, one or more relative dimensions of elements may include the surface area of the first opening 160 may be greater than a surface area of the second face 122, the surface area of the first opening 160 may be less than the surface area of the first face 120, the surface area of the second opening 162 may be less than the surface area of the second face 122, and the surface area of the second opening 162 may be less than the surface area of the first face 120. The one or more relative dimensions may make it such that, before pressing, the peripheral edge 124 of the barrier member 102 can be at least partially conformally engaged with the conformal interior peripheral edge 150 of the aperture 104. Upon pressing, the barrier member 102 may be compressed at its peripheral edge 124 such that the barrier member 102 elongates between its first face 120 and its second face 122 during pressing, contorting larger amounts of material to be part of the peripheral edge 124. This elongation may further engage a greater surface area of the barrier member 102 peripheral edge 124 with a greater surface area of the conformal interior peripheral edge 150. In some embodiments, during and/or after pressing, the barrier member 102 may spill over one or more of the first opening 160 and the second opening 162 of the aperture 104 such that one or more of the first face 120 may cold flow and spill around the first surface 152 and the second face 122 may cold flow and spill around the second surface 154. In this embodiment, after pressing, the aperture 104 may have an aperture depth 164 between the first surface 152 and the second surface 154 along an aperture reference line 156 that is one of equal to, less than, or greater than a member depth 123 the barrier member 102 has between a first face 120 and a second face 122 along a barrier reference line 130. In an embodiment, the aperture 104 may have an opening on the second side 198 and/or the first side 197 that allows part of the barrier member 102 to cold flow to positions outside of the aperture 104 due to the pressing. In this embodiment, the barrier member 102 may be of a greater volume than the aperture 104. Embodiments are also contemplated in which the aperture 104 has greater volume than the barrier member 102.

In an embodiment, the first surface 152 may have alignment elements 222 for aligning the pre-press assembly 200 elements during pressing. For instance, the first surface 152 may have holes that receive alignment pins 224, the alignment pins 224 configured to provide guidance to certain elements when engaging and pressing the pre-press assembly 200. In an embodiment, the alignment pins 224 may be separably couplable. In various embodiments, one or more elements of the assembly 100 and/or 200 or the press block 220 may have holes for receiving these alignment pins 224 to keep the elements of the assembly 100 and/or 200 and the press block 220 in place. In another embodiment, the alignment elements 222 also being holes, the alignment elements 222 may have threading. In this embodiment, the threading may allow for easy coupling and uncoupling of the alignment pins 224. Further, in an embodiment with a pressure distribution element 108, the pressure distribution element 108 may have coupling elements 180, such that the pressure distribution element 108 may be coupled to the first surface 152 after the pressing that forms the interference fit standard barrier 199 is done. For instance, the pressure distribution element 108 may have holes through which screws may be passed or threaded to the alignment elements 222 (here, holes or threaded holes) of the first surface 152, allowing coupling of the pressure distribution element 108 to the first surface 152 after the pressing. It should be appreciated that, in this embodiment, the pressure distribution element 108 can be used to reinforce the interference fit standard barrier 199 to withstand higher explosion pressures.

The passthrough element 106 is an element that passes through the interference fit standard barrier 199 from the first side 197 through to the second side 198. In an embodiment, the passthrough element 106 passes through the barrier member 102, perhaps through an interior channel 126. It should be appreciated that the passthrough element 106 may be pre-coupled before pressing with an element of the pre-press assembly 200, for instance, coupled to the interior channel 126 of the barrier member 102. In another embodiment, the passthrough element 106 may be coupled to the interference fit standard barrier 199 by the pressing, perhaps by passing the passthrough through an interior channel 126 of the barrier member 102 and subsequently pressing the barrier member 102 to cause a pressure-fit coupling between the passthrough element 106 and one or more of the barrier member 102 and the interior channel 126 of the barrier member 102.

In an embodiment, the passthrough element 106 may comprise a PCB. The PCB may be any type of PCB known in the art. In an embodiment, the PCB is formed of wafer layers. In an embodiment, the PCB is formed of wafer layers, with a flexible electronics layer sandwiched between rigid layers. The use of a flexible layer may reduce stress on the PCB when the pressing is done with the passthrough element 106 engaged through the interior channel 126 of the barrier member 102. In an embodiment, the passthrough element 106 may have electronics couplers for coupling to a first network (e.g. network 1008 of FIG. 10) on the first side 197 (e.g. terminal side 1097 of FIG. 10) of an interference fit standard barrier 199 (when engaged for pressing and/or after pressing) and may have electronics for conducting transmitter operations on the second side 198 (e.g. an electronics side 1098).

Also, in an embodiment, when pressing is done, the pressure applied presses at least a portion of the passthrough element 106 from the first side 197 to the second side 198 of the interference fit standard barrier 199. For instance, before pressing, some of the portion (e.g. an electronics portion) of the passthrough element 106 that is supposed to be located on the second side 198 (e.g. an electronics side 1098 of FIG. 10) may be located on the first side 197 (e.g. terminal side 1097 of FIG. 10). This part of the portion of the passthrough element 106 may be appropriately pushed to the second side 198 by the pressing operation that forms the interference fit standard barrier 199.

When assembling, a press block 220 may be used to apply the pressure necessary to create an interference fit standard barrier 199. Pressure may be applied to a press block 220 on its pressure side 226. In order to reduce any potential damage to the passthrough element 106, the press block 220 may have recesses that are at least partially conformal to the shape of the passthrough element 106. These recesses may cause an uneven application of pressure on the barrier member 102 when pressing is done through the press block 220. This uneven application of pressure can result in weak interference fits. For instance, the uneven pressing may cause uneven translation of stored elastic potential energy, leading to failure of an interference fit standard barrier 199.

A pressure distribution element 108 is an element that, when pressed, applies even pressure to another element. For instance, in an embodiment in which the press block 220 with conformal recesses is used, a pressure distribution element 108 may be placed on the end of the press block 220 opposite the pressure side 226 of the press block 220. In an embodiment, the pressure distribution element 108 is engaged between a press block 220 and a barrier member 102 before pressing such that, when pressure is applied to the press block 220 to form an interference fit standard barrier 199, the pressure may be applied through the pressure distribution element 108, the pressure distribution element 108 applying substantially uniform pressure to the barrier member 102 about a surface of the pressure distribution element 108 that opposes the pressure direction 196 of the pressing. In an embodiment, the pressure distribution element 108 may be a flat member with substantially parallel planar faces and a relatively narrow width between the faces. In an embodiment, the passthrough element 106 may have coupling elements 180, for instance, comprising holes and/or screws. These coupling elements 180 may be used to couple the pressure distribution element 108 to the post-press assembly 100, for instance, to a first surface 152 that surrounds a first side 197 of an aperture 104. In an embodiment in which the coupling elements 180 comprise holes, the holes may be used to receive alignment pins 224 to help align the pressure distribution element 108 during pressing. The pressure distribution element 108 may also have a slot 182 for allowing a passthrough element 106 to pass through the slot 182. The slot 182 may be at a position of the pressure distribution element 108 that coincides with the interior channel 126 of the barrier member 102 when the pressure distribution element 108 is engaged with and/or coupled to the barrier member 102 such that a passthrough element 106 can pass straight through both the pressure distribution element 108 and barrier member 102. The slot 182 may be shaped like a typical slot 182 in that it is substantially wider in one dimension than the other at each cross section of the passthrough element 106 along a line perpendicular to the faces of largest surface area of the passthrough element 106.

The housing 110 is any container that holds electronics components. The housing 110 may be one that requires Ex d and/or Ex e certification. In an embodiment, the housing 110 may be a housing 110 or case for one of a flow sensor, a transmitter configured and/or adapted to communicate with a flow sensor, any other electronics containing apparatus, and the like. The housing 110 may be one that, when in use, it resides in an environment with flammable and/or explosive gases. The housing 110 may have the interference fit standard barrier 199 to ensure that any explosion/flame generated by sparking of electronics circuitry in the housing 110 cools down a flame or explosion in the housing 110 that can escape from the housing 110, perhaps spreading to the already flammable or explosive environment. In the embodiment shown in FIG. 1, the housing 110 is a housing for a transmitter that is configured to receive signals from a meter assembly and transmit those signals to a relevant network (e.g. network 1008 of FIG. 10). The second side 198 has electronics that are used as part of the transmitter. These electronics may include circuits configured to one or more of receive, store, and transmit data from a meter assembly to or from terminals on the other side of the interference fit standard barrier 199. In an embodiment, the first side 197 is a terminal side (e.g. terminal side 1097 of FIG. 10) with terminals for transmitting signals between the electronics side (e.g. electronics side 1098 of FIG. 10) and an external network (e.g. network 1008 of FIG. 10). The terminal side is separated from the electronics side by the interference fit standard barrier 199, perhaps preventing transmission of flame/explosion generated due to sparking in the electronics circuitry on the electronics side that otherwise could escape to the terminal side and, perhaps subsequently, an environment with flammable or explosive gases in sufficient concentration to cause a hazardous fire and/or explosion. The passthrough element 106 may be a PCB in this embodiment, the PCB having one side with terminal elements and another side with electronics elements. The electronics elements may be positioned on the electronics side of the interference fit standard barrier 199, and the terminal elements may be positioned on the terminal side of the interference fit standard barrier 199.

Embodiments are contemplated in which one or more of the passthrough element 106 and the pressure distribution element 108 are not part of one or more of the assemblies 100 and 200. In these embodiments, portions of steps and arrangements that involve those elements may not be incorporated into the invention. For instance, embodiments are contemplated in which the assemblies 100 and/or 200 do not have a passthrough element 106 through the interference fit standard barrier 199. Further, embodiments are contemplated in which the assemblies 100 and/or 200 do not have a pressure distribution element 108. Embodiments in which neither are elements of the assemblies 100 and/or 200 are also contemplated.

After pressing, the spacing between elements that form the interference fit standard barrier 199 may be limited in order to prevent flames or explosions on one side of the interference fit standard barrier 199 from reaching the other side of the interference fit standard barrier 199. It should be appreciated that interference fit standard barriers 199 need not be hermetic seals. Some gas exchange may be allowed through the interference fit standard barrier 199. In order to assure the flow of gases is limited, the spaces between one or more elements that form the interference fit standard barrier 199 may be limited to a predefined threshold, for instance, to less than 0.05 mm, 0.08 mm, or 0.13 mm. In an embodiment, any spaces between the barrier member 102 and the aperture 104 may be less than a predefined threshold. In an embodiment, any spaces between the peripheral edge 124 and the conformal interior peripheral edge 150 are less than a predefined threshold. In an embodiment, any spaces between a passthrough element 106 and a barrier member 102 are less than a predefined threshold. In an embodiment any spaces between a passthrough element 106 and an interior channel 126 of a barrier member 102 are less than a predefined threshold.

As can be seen in FIGs. 2A and 2B which show an embodiment of the pre-press assembly 200, before pressing, a side of the press block 220 opposite its pressure side 226 may be engaged with one or more of the pressure distribution element 108 and the passthrough element 106. If the press block 220 is at least partially engaged with the passthrough element 106, the press block 220 may have recesses (not shown) that receive at least part of the passthrough element 106. In some embodiments, upon pressing the press block 220 with the passthrough element 106 partially engaged in the recesses of the press block 220, parts of the passthrough element 106 may be deliberately bent to conform to a desired resulting shape. This bend may better accommodate certain connectors for electronics components. In an embodiment, the press block 220 may have internal channels for receiving alignment elements 222, for instance, alignment pins 224 coupled to corresponding holes in a first surface 152.

The pressure distribution element 108 may receive unevenly distributed pressure from the press block 220 on the side of the pressure distribution element 108 where pressure is applied. The pressure distribution element 108 may have a substantially uniform and/or flat opposing side (opposite the side to which pressure is applied by the press block 220) that applies even pressure to elements on the opposing side, for instance, a barrier member 102. In an embodiment, the pressure distribution element 108 may have holes for receiving alignment elements 222, for instance, alignment pins 224 coupled to corresponding holes in a first surface 152. In this embodiment, the holes (and perhaps additional holes) in the pressure distribution element 108 may also be used to couple the pressure distribution element 108 to the first side 197 of the interference fit standard barrier 199, perhaps reinforcing the interference fit standard barrier 199. In this embodiment, the pressure distribution element 108 may abut the first face 120 of the barrier member 102. In an alternative embodiment in which a pressure distribution element 108 is not used, the press block 220 may directly engage with the barrier member 102 to press the barrier member 102.

The barrier member 102 may be engaged with one or more of the press block 220 and the pressure distribution element 108 on the first face 120. The barrier member 102 may engage the aperture 104, perhaps at the barrier member's 102 peripheral edge 124. The pre-press assembly 200 may have the peripheral edge 124 of the barrier member 102 engaged with an interior portion of the aperture 104, for instance, a conformal interior peripheral edge 150.

Before pressing, the barrier member 102 may only be partially engaged with the aperture 104. For instance, in an embodiment, only a portion of the peripheral edge 124 engages with and/or conforms to the conformal interior peripheral edge 150 before pressing. Before pressing, the peripheral edge 124 and the conformal interior peripheral edge 150 may be at least partially conformal in that they are angled and/or are complementary and/or conformal with one another, perhaps with the peripheral edge 124 having an angle 128 and the conformal interior peripheral edge 150 having a complementary angle 158. For instance, in an embodiment the angle 128 and the complementary angle 158 may be negatives of one another relative to a particular reference, for instance, one or more of the barrier reference line 130 and the aperture reference line 156. It should be appreciated that the angles 128 and complementary angles 158 may be exaggerated in the figures for purposes of demonstration. In an embodiment where only a portion of the peripheral edge 124 is conformal with the conformal interior peripheral edge 150 before pressing, the pressing may cause the interior peripheral edge 124 to deform with the rest of the barrier member 102 and cause the resulting deformed peripheral edge 124 to have a greater complementary and/or conformal surface area shared between the peripheral edge 124 and the conformal interior peripheral edge 150 than before the pressing, perhaps contributing to the formation of the interference fit standard barrier 199.

The aperture 104 may be an element of a rigid structure, for instance, a housing 110, the rigid structure providing a substrate for providing opposing pressure that can be translated through the aperture 104, perhaps via the conformal interior peripheral edge 150, to oppose the pressure applied to the first face 120 of the barrier member 102.

In an embodiment, the arrangement of elements of the pre-press assembly 200 may be, in order from a direction from a first side 197 to a second side 198 (in a pressure direction 196), the press block 220, the pressure distribution element 108, the barrier member 102, and the aperture 104. It should be appreciated that the barrier member 102 may be partially conformal and engaged with part of the interior of the aperture 104, such that a portion of the barrier member 102 and the aperture 104 overlap in the direction from the first side 197 to the second side 198 (and/or the pressure direction 196). Also, a passthrough element 106 may be arranged on the interior of some elements, for instance, one or more of a recess in the press block 220, a slot 182 in the pressure distribution element 108, an interior channel 126 of the barrier member 102, and through part of the aperture 104. The passthrough element 106 may have ends in an axis defined by a pressure direction 196 defined from the first side 197 to the second side 198, for instance an end that is partially situated in the recesses of the press block 220 and another end that is situated on the second side 198 before pressing. In an embodiment in which the pressure distribution element 108 is not used, the order may be the same except that the pressure distribution element 108 is not included.

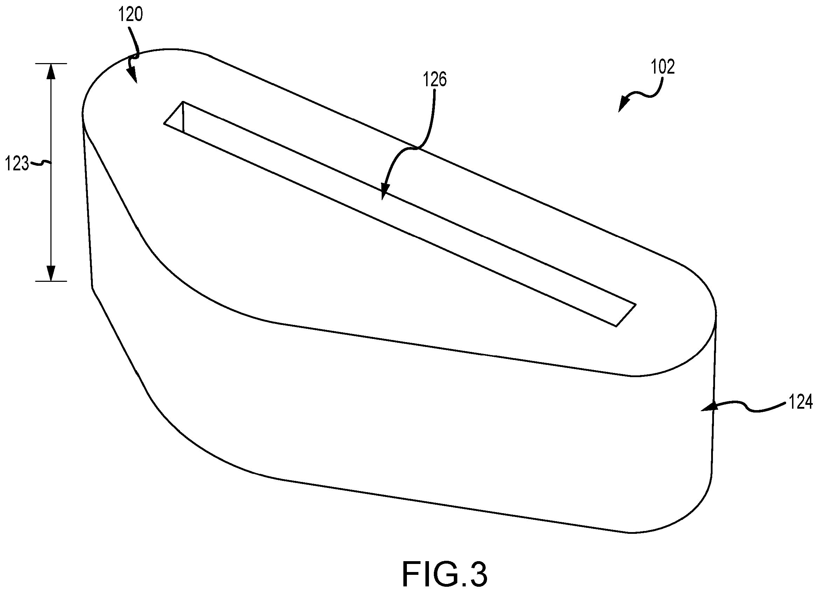

**FIG. 3** shows a perspective view of an embodiment of a barrier member 102 for forming an interference fit standard barrier 199. The barrier member 102 presented in FIG. 3 may be an embodiment of the barrier member 102 presented in FIGs. 2A and 2B (before pressing). Specialized components may be needed to generate interference fit standard barriers 199. Existing components are not specifically configured for this purpose, and they may not be easily adaptable for the purpose of forming an interference fit standard barrier 199. For instance, existing polymer bushings typically are tiered with significant discontinuities between discontinuous levels and round shaped interior channels 126 that are poorly adapted to accepting passthrough elements 106 such as PCBs and forming interference fit standard barriers 199 around them. Applicant's barrier member 102, before pressing, may have one or more attributes that make it better adapted to the application of creating an interference fit standard barrier 199, and/or an interference fit standard barrier 199 with a passthrough element 106.

The barrier member 102 may be adapted to such an application by incorporating features already described with respect to the barrier member 102, for instance, by having a peripheral edge 124 that interacts with a conformal interior peripheral edge 150 of an aperture 104, by the peripheral edge 124 and the conformal interior peripheral edge 150 having conformal and/or complementary portions before pressing, by having a peripheral edge 124 with an angle 128, by the first face 120 having a greater surface area than the second face 122, by composing the barrier member 102 of materials that have appropriate properties (as described in this specification) for making an interference fit standard barrier 199, by composing the barrier member 102 of materials that have properties relative to the elements that define the aperture 104 (against which pressure is exerted during pressing, e.g. the conformal interior peripheral edge 150), by a portion of the first face 120 having a greater surface area than any cross section of the aperture 104, and the like. This list of features is exemplary, and all of the features stated with respect to the embodiments of the barrier member 102 in this specification are contemplated to improve the barrier member 102 and the manner in which the barrier member 102 is used in an interference fit standard barrier 199.

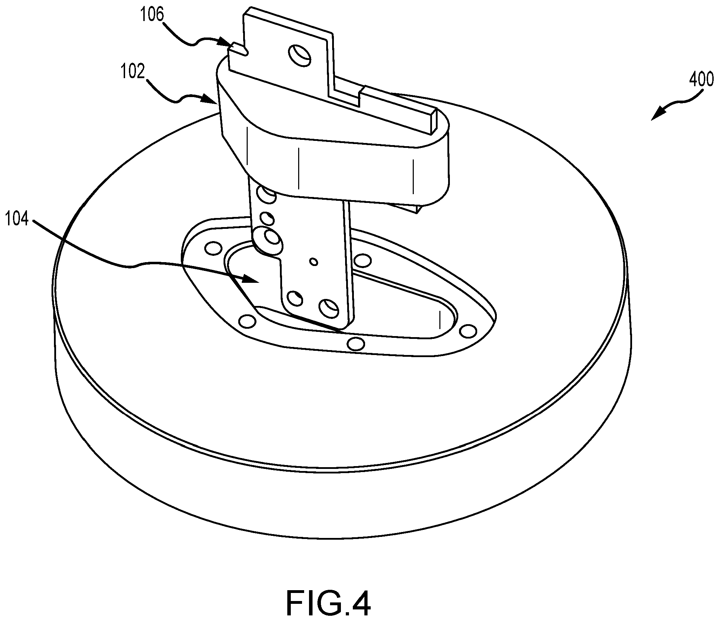

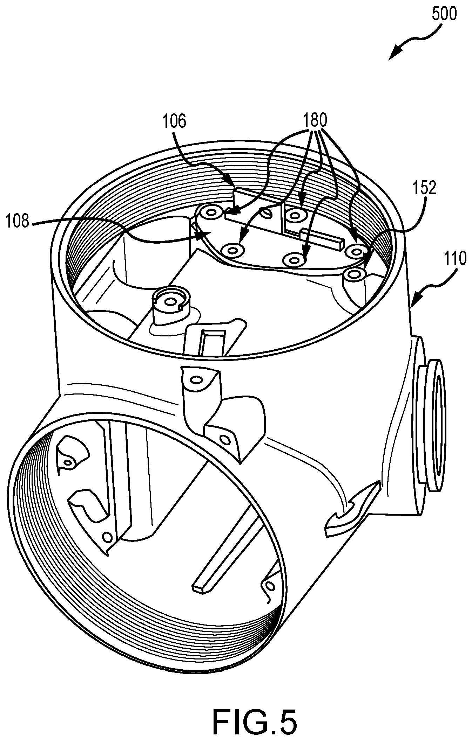

FIGs. 4 and 5 show views of further embodiments of the invention. Elements presented with reference numbers in FIGs. 4 and 5 are embodiments of elements with like reference numbers in FIGs. 1-3.

**FIG. 4** shows a perspective view of an embodiment of a pre-engagement assembly 400 before the barrier member 102 is engaged with the aperture 104.

**FIG. 5** shows a perspective view of an embodiment of a secured assembly 500 after a pressure distribution element 108 is coupled to a first surface 152. In this embodiment, the pressure distribution element 108 is coupled to the secured assembly 500 using coupling elements 180. Parts of the coupling elements 180 may be received by holes in the first surface 152, with some of the holes, perhaps, having served as elements complementary to and/or in alignment with alignment elements 222 before and during pressing.

### Flowcharts

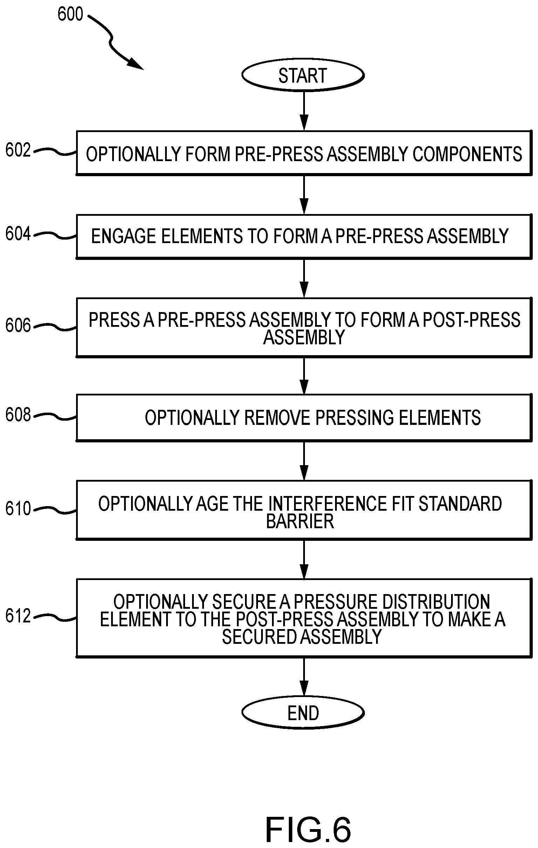

FIGs. 6-9 show flowcharts of embodiments of methods for engaging elements of a pre-press assembly 200, pressing elements of a pre-press assembly 200, forming a post-press assembly 100, and securing a post-press assembly 100 to form a secured assembly 500. The methods disclosed in the flowcharts are non-exhaustive and merely demonstrate potential embodiments of steps and orders. The methods must be construed in the context of the entire specification, including elements disclosed in descriptions of the interference fit standard barrier 199, descriptions of the pressed assembly 100, descriptions of the pre-press assembly 200, and/or any of the elements disclosed in FIGs. 1-5. The methods represented by the flowcharts and corresponding descriptions should be construed in the context of the entire specification, including elements disclosed in descriptions of FIGs. 1-5. The barrier member 102, aperture 104, passthrough element 106, pressure distribution element 108, housing 110, interference fit standard barrier 199, post-press assembly 100, pre-press assembly 200, first side 197, second side 198, first face 120, second face 122, peripheral edge 124, interior channel 126, angle 128, barrier reference line 130, member depth 123, conformal interior peripheral edge 150, first surface 152, second surface 154, aperture reference line 156, complementary angle 158, first opening 160, second opening 162, aperture depth 164, coupling elements 180, slot 182, press block 220, alignment elements 222, alignment pins 224, and pressure side 226 explicitly referred to or implicitly used in the flowcharts and corresponding method descriptions may be embodiments of the barrier member 102, aperture 104, passthrough element 106, pressure distribution element 108, housing 110, pressure direction 196, interference fit standard barrier 199, post-press assembly 100, pre-press assembly 200, first side 197, second side 198, first face 120, second face 122, peripheral edge 124, interior channel 126, angle 128, barrier reference line 130, member depth 123, conformal interior peripheral edge 150, first surface 152, second surface 154, aperture reference line 156, complementary angle 158, first opening 160, second opening 162, aperture depth 164, coupling elements 180, slot 182, pressure direction 196, press block 220, alignment elements 222, alignment pins 224, and pressure side 226 as disclosed in FIGS. 1-3, although any suitable barrier member 102, aperture 104, passthrough element 106, pressure distribution element 108, housing 110, interference fit standard barrier 199, post-press assembly 100, pre-press assembly 200, first side 197, second side 198, first face 120, second face 122, peripheral edge 124, interior channel 126, angle 128, barrier reference line 130, member depth 123, conformal interior peripheral edge 150, first surface 152, second surface 154, aperture reference line 156, complementary angle 158, first opening 160, second opening 162, aperture depth 164, coupling elements 180, slot 182, pressure direction 196, press block 220, alignment elements 222, alignment pins 224, and pressure side 226 may be employed in alternative embodiments.

**FIG. 6** shows a flowchart of an embodiment of a method 600 of forming a component with an interference fit standard barrier 199.

Step 602 is optionally forming pre-press assembly 200 components. This forming 602 may include forming one or more of the barrier member 102, aperture 104 (and/or the physical elements that define the aperture 104), and passthrough element 106. The step 602 is optional to the extent that the parts may be formed before the method 600 starts. The pressure distribution element 108 may also optionally be formed if the embodiment of the method 600 incorporates the pressure distribution element 108. The components may be formed by any known method, for instance, extrusion, molding, 3d printing, casting, coupling sub-elements, any other known method for forming elements, and the like. Any of the elements of the pre-press assembly 200 may be formed having any number of the features described in this specification. With regards to the barrier member 102, the physical properties of the materials may be such that conventional methods of forming may be cumbersome. In these embodiments, the barrier member 102 may be formed by cutting away material from a large block to substantially form multiple barrier members 102 that can be subsequently cut away or otherwise removed from the large block. This may be advantageous for barrier members 102 composed of materials that have low coefficients of friction when interacting with conventional materials in the relevant context (e.g. stainless steel, aluminum, or C22 in vibratory sensors and/or transmitters). These may be too slick to handle individual using hands or tools because of sufficiently low coefficients of friction (e.g. between the tools or hands used and the material of the barrier member 102).

Step 604 is engaging elements to form a pre-press assembly 200. Elements of the pre-press assembly 200 may be engaged by engaging conformal portions of the elements. Engaging the passthrough element 106 with the barrier member 102 may be done before the method begins such that the passthrough element 106 is already coupled to the barrier member 102. In another embodiment, the passthrough element 106 is engaged with the barrier member 102 by passing the passthrough element 106 through an interior channel 126 of the barrier member 102. Engaging the press block 220 may include one or more of engaging the press block 220 recesses with the passthrough element 106, engaging the press block 220 with an optional pressure distribution element 108, and engaging the press block 220 to a first face 120 of a barrier member 102. In embodiments where the pressure distribution element 108 is used to apply pressure from the press block 220 evenly (to compensate for recesses) to the barrier member 102, the press block 220 may not be directly engaged with the barrier member 102. In other embodiments, perhaps ones where the pressure distribution element 108 is not used to apply pressure from the press block 220 to the barrier member 102, the press block 220 may be directly engaged with the barrier member 102. The barrier member 102 may be engaged with the aperture 104, perhaps having the peripheral edge 124 of the barrier member 102 at least partially engaged with the at least part of the conformal interior peripheral edge 150 of the aperture 104. Once engaged, the barrier member 102 may be engaged with the aperture 104 such that the barrier member 102 at least partially resides within the aperture 104. In an embodiment, the engaging the barrier member 102 with the aperture 104 may comprise engaging the barrier member 102 with the aperture 104 such that the barrier member 102 cannot be pressed further into the aperture 104 without deforming the barrier member 102. Some of the elements may be guided by alignment elements 222, for instance, alignment pins 224. In an embodiment, one or more of the barrier member 102, pressure distribution element 108, and press block 220 may have holes or channels for use as alignment elements 222 to align the elements for pressing using, for example, alignment pins 224. In an embodiment, the first surface 152 may have alignment elements 222 that include holes for receiving guiding elements, such as alignment pins 224. In an embodiment, the holes and alignment pins 224 may be at least partially threaded to allow for a secure and aligned detachable coupling.

Step 606 is pressing a pre-press assembly 200 to form a post-press assembly 100. In this step, pressure is applied to the press block 220, for instance, in a pressure direction 196 from the first side 197 to the second side 198. The pressure applied through the press block 220 may be applied to the first face 120 of the barrier member 102, either directly or via a pressure distribution element 108. Embodiments are also contemplated where a press block 220 intermediate is not used. Step 606 may also apply pressure through the press block 220 recesses to the passthrough element 106. When the pressure is applied by step 606, the rigid conformal interior peripheral edge 150 of the aperture 104 may provide an opposing pressure force to the peripheral edge 124 of the barrier member 102 such that pressure applied to the first face 120 may cause the barrier member 102 to deform to conform to narrower portions of the conformal interior peripheral edge 150 that are closer to the second side 198, perhaps even having some of the barrier member 102 cold flow over one or more of the first opening 160 and second opening 162. The directional pressure applied in the pressure direction 196 may be translated by portions of the peripheral edge 124 that are wider than portions of the conformal interior peripheral edge 150 into which the wider portions of the peripheral edge 124 are pushed to make pressure gradients in a transverse direction between the barrier member 102 and the aperture 104. Some of the energy of the pressing is translated into deforming the barrier member 102 to conform to the interior of the aperture 104. Some of the energy of the pressing is translated into stored elastic potential energy in the barrier member 102, such that, over a, perhaps predetermined, range of operating conditions, the stored elastic potential energy can compel the barrier member 102 to responsively expand and/or contract to maintain the interference fit standard barrier 199. It should be appreciated that the element having the aperture 104 (perhaps the housing 110) may expand and contract at rates different from the rates of expansion of the barrier member 102, and this stored elastic potential energy maintains the interference fit standard barrier 199 by responding to expansions and/or contractions of the aperture 104. In an embodiment, some of the energy from pressing may also be translated into deforming the barrier member 102 such that a portion of the barrier member 102 cold flows, perhaps cold flowing through one or more of the first opening 160 and the second opening 162 of the aperture 104. In embodiments with a passthrough element 106, the pressure applied may be sufficient to form an interference fit between an interior channel 126 of the barrier member 102, perhaps making a passthrough element interference fit such that the interface between the interior channel 126 and the passthrough element 106 may satisfy the same flameproof and/or explosion proof standards with which the interference fit standard barrier 199 complies.

Step 608 is optionally removing pressing elements. Removing pressing elements may include removing one or more of the press block 220, pressure distribution element 108, alignment elements 222, and alignment pins 224. In an embodiment, the pressure distribution element 108 is used during pressing and subsequently removed. In another embodiment, as shown in step 612, the pressure distribution element 108 can be integrated into the post-press assembly 100.

Step 610 is optionally aging the interference fit standard barrier 199. In embodiments where the interference fit standard barrier 199 has polymeric components, for instance, if the barrier member 102 is composed of a polymeric material, the interference fit standard barrier 199 may be aged in order to assure quality. When originally formed, polymeric elements may still undergo significant structural change. This change can include physical structural changes as well as chemical changes associated with the polymer chains interacting. This aging allows the polymeric material to settle into a relatively consistent resting configuration and allows any chemical or physical interactions between polymeric structural elements to occur. Typically, when polymers age, they shrink. In the context of interference fit standard barriers 199, this can be problematic, as spaces between elements are supposed to be limited. When elements of the barrier member 102 shrink, greater spaces between polymeric and non-polymeric materials increase. The pressing may store significant elastic potential energy in a pressed polymeric element that forms the interference fit (e.g. a polymeric barrier member 102), such that, despite aging causing shrinking of the polymeric element, the stored elastic potential energy may counter some of the shrinking. This stored elastic potential energy and resulting expansion can mitigate the effect of shrinking due to aging. This stored elastic potential energy causes responsive expansion to effectively fill some of the spaces formed. It should be appreciated that, if, after aging, the gaps between elements of the interference fit standard barrier 199 are too large (perhaps exceeding a predetermined threshold), the defective interference fit standard barrier 199 may have to be reformed or the component with the defective interference fit standard barrier 199 may be discarded. Aging may be done passively by exposing the polymeric elements to ambient conditions or aging may be active, for instance, by exposing the polymeric elements to radiation (e.g. sunlight), specific levels of humidity, specific chemical environments (e.g. in oxygen rich environments), specific temperatures or temperature ranges, under conditions of physical stresses (e.g. vibrations), combinations thereof, or other conditions commonly used in the art. The aging may be conducted for an appropriate period of time, for instance, at least a day, at least a week, at least two weeks, at least a month, periods known in the art of polymer aging, or a like period. Polymer aging is well-established in the art, and further description of aging is omitted for purposes of brevity.

Step 612 is optionally securing a pressure distribution element 108 to the post-press assembly 100 to make a secured assembly 500. A pressure distribution element 108 may be incorporated into the post-press assembly 100 by coupling the pressure distribution element 108 to one or more of the first surface 152 and the barrier member 102. In an embodiment in which the alignment elements 222 having the holes that receive removable alignment elements 222, perhaps the alignment pins 224, the holes may also serve as coupling substrates for coupling elements 180 of the pressure distribution element 108 to the first surface 152. For instance, the coupling elements 180 may be holes through the pressure distribution element 108 and screws that are passed through the holes and couple with the holes in the first surface 152. In an embodiment in which these holes in the first surface 152 are threaded for receiving threaded alignment pins 224, screws used to secure the pressure distribution element 108 may be threaded such that the threading corresponds to threading in the holes in the first surface 152. In an embodiment, the first surface 152 may have further holes, perhaps threaded holes, that are not used for aligning the pre-press assembly 200 components but are used to couple the pressure distribution element 108 to the first surface 152. In this embodiment, the pressure distribution element 108 may have the same number of holes and/or screws as the first surface 152. In various embodiments steps 608-612 may be conducted in any order after step 606.

Embodiments are contemplated in which one or more of the passthrough element 106 and the pressure distribution element 108 are not part of the assemblies 100 and/or 200. In these embodiments, portions of steps that involve those elements may not be conducted.

In an embodiment, each of the steps of the method shown in FIG. 6 is a distinct step. In another embodiment, although depicted as distinct steps in FIG. 6, steps 602-612 may not be distinct steps. In other embodiments, the method shown in FIG. 6 may not have all of the above steps and/or may have other steps in addition to or instead of those listed above. The steps of the method 600 shown in FIG. 6 may be performed in another order. Subsets of the steps listed above as part of the method 600 shown in FIG. 6 may be used to form their own method. The steps of method 600 may be repeated in any combination and order any number of times, for instance, continuously looping in order to form multiple interference fit standard barriers 199.

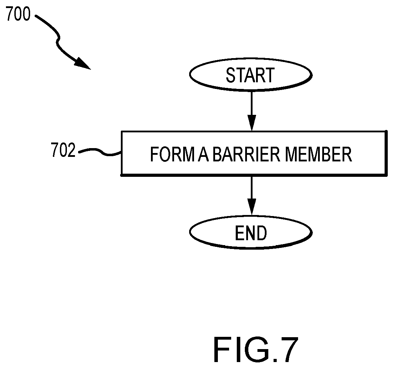

**FIG. 7** shows a flowchart of an embodiment of a method 700 of forming a barrier member 102. Method 700 may be an embodiment of step 602.

Step 702 is forming a barrier member 102. The barrier member 102 may be formed by any known method, for instance, extrusion, molding, 3d printing, casting, coupling sub-elements, any other known method for forming elements, and the like. With regards to the barrier member 102, the physical properties of the materials may be such that conventional methods of forming may be cumbersome. In these embodiments, the barrier member 102 may be formed by cutting away material from a large block to substantially form multiple barrier members 102 that can be subsequently cut away or otherwise removed from the large block. This may be advantageous for barrier members 102 composed of materials that have low coefficients of friction when interacting with conventional materials in the relevant context (e.g. stainless steel, aluminum, or C22 in vibratory sensors and/or transmitters). These may be too slick to handle individually using hands or tools because of sufficiently low coefficients of friction (e.g. between the tools or hands used and the material of the barrier member 102). Step 702, itself, may be an embodiment of step 602.

In other embodiments, the method shown in FIG. 7 may have other steps in addition to or instead of the step listed above. Subsets of the step listed above as part of the method 700 shown in FIG. 7 may be used to form their own method. The step of method 700 may be repeated any number of times, for instance, continuously looping in order to form multiple barrier members 102.

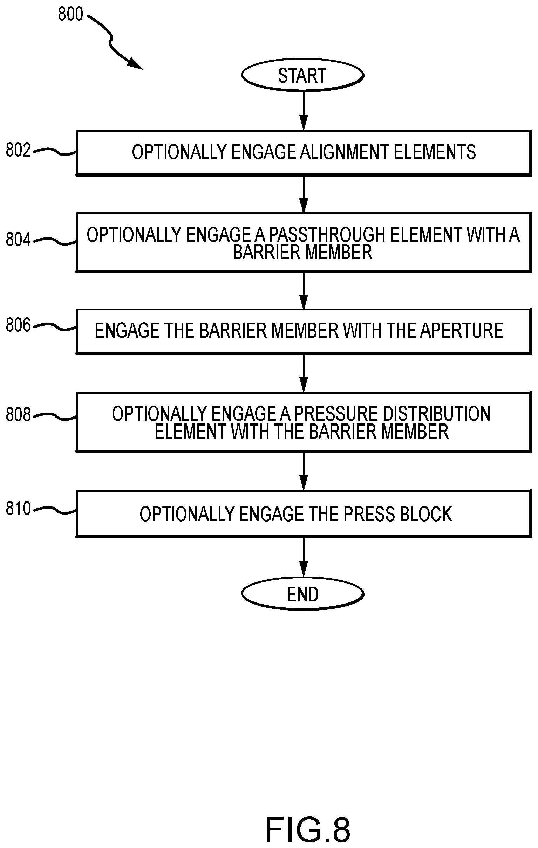

**FIG. 8** shows a flowchart of an embodiment of a method 800 of engaging elements to form a pre-press assembly 200. Method 800 may be an embodiment of step 604. Elements of the pre-press assembly 200 may be engaged by engaging conformal portions of the elements. The engaging steps presented can be conducted in any order.

Step 802 is optionally engaging alignment elements 222. Some of the elements engaged may be guided by alignment elements 222, for instance, alignment pins 224. In an embodiment, one or more of the barrier member 102, pressure distribution element 108, and press block 220 may have holes or channels for use as alignment elements 222 to align the elements for pressing using, for example, alignment pins 224. In an embodiment, the first surface 152 may have alignment elements 222 that include holes for receiving guiding elements, such as alignment pins 224. In an embodiment, the holes and alignment pins 224 may be at least partially threaded to allow for a secure and aligned detachable coupling. In an embodiment, step 802 may include engaging alignment pins 224, perhaps securing them to other alignment elements 222 in the first surface 152.

Step 804 is optionally engaging a passthrough element 106 with a barrier member 102. In an embodiment, the passthrough element 106 is not coupled to the barrier member 102 prior to the method. In this embodiment, a passthrough element 106 may be engaged with the barrier member 102 by passing the passthrough element 106 through the barrier member 102, perhaps through an interior channel 126. In this embodiment, the pressing that may follow method 800 may cause a coupling between the passthrough element 106 and the barrier member 102, for instance, at least a portion of the passthrough element 106 being coupled to an interior channel 126 of the barrier member 102 by interference fit. In embodiments in which the passthrough element 106 is already coupled to the barrier member 102 before the method starts, step 804 may be superfluous. Also, step 804, itself, may be an embodiment of step 604.

Step 806 is engaging the barrier member 102 with the aperture 104. The barrier member 102 may be engaged with the aperture 104, perhaps having the peripheral edge 124 of the barrier member 102 at least partially engaged with the conformal interior peripheral edge 150 of the aperture 104. Once engaged, the barrier member 102 may be engaged with the aperture 104 such that the barrier member 102 at least partially resides within the aperture 104. In an embodiment, the barrier member 102 may be engaged with the aperture 104 such that the barrier member 102 cannot be pushed further into the aperture 104 without deforming the barrier member 102.

Step 808 is optionally engaging a pressure distribution element 108 with the barrier member 102. In an embodiment in which a pressure distribution element 108 is used in the assemblies 100 and/or 200, the pressure distribution element 108 may be engaged with the barrier member 102. If the barrier member 102 has an engaged passthrough element 106, engaging the pressure distribution element 108 with the barrier member 102 may include engaging the passthrough element 106 with a slot 182 in the pressure distribution element 108. In an embodiment in which the pressure distribution element 108 is engaged with the barrier member 102 before the barrier member 102 is engaged with the passthrough element 106, the passthrough element 106 may be engaged to the pre-press assembly 200 by being passed through both of the pressure distribution element 108 and the barrier member 102 at the same time, perhaps negating the need for a separate step 802.

Step 810 is optionally engaging the press block 220. Engaging the press block 220 may include one or more of engaging the press block 220 recesses with the passthrough element 106, engaging the press block 220 with an optional pressure distribution element 108, and engaging the press block 220 to a first face 120 of a barrier member 102. In embodiments where the pressure distribution element 108 is used to apply pressure from the press block 220 evenly (to compensate for recesses) to the barrier member 102, the press block 220 may not be directly engaged with the barrier member 102. In other embodiments, perhaps ones where the pressure distribution element 108 is not used to apply pressure from the press block 220 to the barrier member 102, the press block 220 may be directly engaged with the barrier member 102. Combinations of both, for instance where the pressure distribution element 108 is present in the assemblies 100 or 200 but there is still at least some direct contact between the press block 220 and the barrier member 102 are contemplated.

Further, in embodiments that use alignment elements 222, the press block 220 may have holes or recesses for receiving portions of alignment elements 222, for instance, alignment pins 224. In such an embodiment, the engaging step 808 may include engaging press block 220 with the alignment elements 222, for instance, engaging with the alignment pins 224. This step is optional, as embodiments in which pressure is applied by something other than a press block 220 are contemplated.

Embodiments are contemplated in which one or more of the passthrough element 106 and the pressure distribution element 108 are not part of the assemblies 100 and/or 200. In these embodiments, portions of steps that involve those elements may not be conducted.

In an embodiment, each of the steps of the method shown in FIG. 8 is a distinct step. In another embodiment, although depicted as distinct steps in FIG. 8, steps 802-810 may not be distinct steps. In other embodiments, the method shown in FIG. 8 may not have all of the above steps and/or may have other steps in addition to or instead of those listed above. The steps of the method 800 shown in FIG. 8 may be performed in another order. Subsets of the steps listed above as part of the method 800 shown in FIG. 8 may be used to form their own method. The steps of method 800 may be repeated in any combination and order any number of times, for instance, continuously looping in order to form multiple interference fit standard barriers 199.

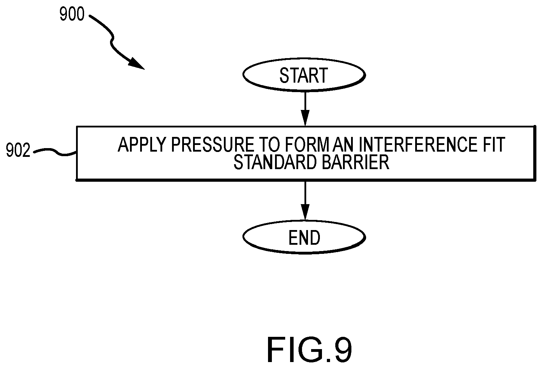

**FIG. 9** shows a flowchart of an embodiment of a method 900 of pressing a pre-press assembly 200 to form a post-press assembly 100. Method 900 may be an embodiment of step 606.

Step 902 is applying pressure to form an interference fit standard barrier 199. In an embodiment, the pressure is applied to a first side of a press block 220. In an embodiment where no press block 220 is used, pressure may be applied directly to one of a barrier member 102 and a housing with an aperture 104. The pressure may be applied by any machine configured to press elements, for instance, a mechanical press. The pressure may be applied in a pressure direction 196 from a first side 197 to a second side 198. The pressure may be applied to a press block 220 of a pre-press assembly 200, perhaps a pressure side 226 of the press block 220. The pressure is exerted through the press block 220 to elements with which the press block 220 is engaged on the side opposite the press block 220. The pressure applied through the press block 220 may be applied to the first face 120 of the barrier member 102, either directly or via a pressure distribution element 108. The pressing may also apply pressure through the press block 220 recesses to the passthrough element 106. When the pressure is applied during step 606, the rigid conformal interior peripheral edge 150 of the aperture 104 may provide an opposing pressure force to the peripheral edge 124 of the barrier member 102 such that pressure applied to the first face 120 may cause the barrier member 102 to deform to conform to narrower portions of the conformal interior peripheral edge 150 that are closer to the second side 198, perhaps even having some of the barrier member 102 cold flow over one or more of the first opening 160 and second opening 162. Step 902, itself, may be an embodiment of step 606. In an embodiment, after the pressing step 902, any of steps 608-612 may optionally be conducted in any order. In a same or different embodiment, before the pressing step 902, any of steps 602-604 may optionally be conducted in any order.

The pressure required in step 902 may be reduced by the arrangement of the elements of the pre-press assembly 200. For instance, the pressure applied may be of a magnitude that is less than or equal to 3000 pounds. Significantly higher pressures would be required for compressing barrier members 102 that are not malleable. Further, by allowing the barrier member 102 to deform and/or cold flow into the aperture 104, without providing an opposing face, less pressure need be applied to create the interference fit standard barrier 199 than would be necessary if the aperture 104 did not accommodate the expansion and potential overflow of the barrier member 102 under pressure. The expansion and potential overflow may be facilitated by the aperture 104 having a depth between its surrounding first surface 152 and second surface 154 greater or lesser than a barrier member 102 width between its first face 120 and its second face 122. The expansion and potential overflow may be facilitated by the aperture 104 having the second opening 162, perhaps allowing a portion of the deformed (during pressing) barrier member 102 to partially protrude from the second opening 162. The result of step 902 may be a post-press assembly 100.

In an embodiment, in order to assure that sufficient elastic potential energy is stored in the barrier member 102 after pressing, the barrier member 102 is not heated before and/or after pressing. Heating may cause an expansion or contraction of the barrier member 102, and subsequent cooling may cause extra contraction or expansion of the barrier member 102, potentially compromising the interference fit standard barrier 199 when the barrier member 102 cools. This may be facilitated by assuring that the barrier member 102 may remain at a temperature below the melting point determined at standard temperature and pressure of the material(s), of which the barrier member 102 is composed one or more of before, during, and after one or more of pressing and engaging elements.

Embodiments are contemplated in which one or more of the passthrough element 106 and the pressure distribution element 108 are not part of the assemblies 100 and/or 200. In these embodiments, portions of steps that involve those elements may not be conducted.

In other embodiments, the method shown in FIG. 9 may have other steps in addition to or instead of the step listed above. Subsets of the step listed above as part of the method 900 shown in FIG. 9 may be used to form their own method. The step of method 900 may be repeated any number of times, for instance, continuously looping in order to form multiple post-press assemblies 100 and/or secured assemblies 500.

### System

**FIG. 10** shows a block diagram of an embodiment of a system 1000 having an interference fit standard barrier 1099. The system 1000 has an electrical component 1002, a device 1004, a network 1008, a first communication channel 1020, and a second communication channel 1022. The electrical component 1002 has a passthrough PCB 1006, electronics 1010, a terminal 1012, a terminal side 1097, an electronics side 1098, and the interference fit standard barrier 1099.

The electrical component 1002 is a component that processes data from and/or transmits data to or between elements. In an embodiment, the electrical component 1002 is a transmitter that is configured to communicate with a device 1004 (e.g. a sensor) and a network 1008. In this embodiment, the transmitter may have electronics 1010 that can one or more of act as a transceiver between devices 1004, store data from devices 1004, process data from devices 1004, transmit and receive data to and from devices 1004, and the like. The electrical component 1002 may have an assembly (e.g. post-press assembly 100 or secured assembly 500) with an interference fit standard barrier 1099. The interference fit standard barrier 1099 may be an embodiment of the interference fit standard barrier 199. The interference fit standard barrier 1099 may provide a flame proof and/or explosion proof barrier (perhaps satisfying one or more of "Ex d" and "Ex e" IEC standards) between a terminal side 1097 and an electronics side 1098. The terminal side 1097 and the electronics side 1098 may be embodiments of the first side 197 and the second side 198, respectively. The terminal side 1097 may have a terminal 1012, an element that is configured to electronically communicate with external networked elements via network 1008. The electronics side 1098 may have electronics 1010, the electronics 1010 being electronics for processing, storing, and/or communicating data. In an embodiment, the data being one or more of processed, stored, or communicated by the electronics 1010 may be data representing one or more of a flowrate, density, viscosity, speed of sound, time delay, phase shift, frequency, temperature, fluid composition, aeration or void fraction, response signals, drive signals, other signals associated with vibratory sensors, and the like. The electrical component 1002 may have a passthrough PCB 1006 that passes through the interference fit standard barrier 1099 to allow communication between the terminal side 1097 and the electronics side 1098 of the interference fit standard barrier 1099. Passthrough PCB 1006 may be an embodiment of passthrough element 106. Although not shown, in an embodiment, the interference fit standard barrier 1099 may have a secured assembly 500 with a coupled pressure distribution element 108.

The device 1004 is an electronic element that is configured to communicate data with the electrical component 1002. The device 1004 may communicate with the electronics 1010 of the electrical component 1002 via a second communication channel 1022. In an embodiment, the device 1004 is a sensor, for instance, a Coriolis flow sensor, a densitometer, a viscometer, pressure sensor, any other device 1004 that measures properties of fluids, a vibratory sensor, and/or the like. In this embodiment, the electrical component 1002 may be a transmitter that is configured to communicate data to and from the device 1004, for instance, sensor data. In various embodiments, sensor data may include one or more of flowrate measurements, density measurements, viscosity measurements, pressure measurements, pickoff signals, time delays or phase shifts associated with Coriolis forces, frequencies, phase differences, phase errors, command frequencies, other commands, and/or the like.

The network 1008 is an electronic communication medium that can be used to communicate with any number of devices 1004 and/or electrical components 1002 and may store or transmit data as necessary. The network 1008 may one or more of store data on, transmit data to, or receive data from the electrical component 1002. Networked elements may be used to give commands to and/or receive data from one or more of the electrical component 1002 and the device 1004. These network 1008 elements may also process data from one or more of the electrical component 1002 and the device 1004. The data transferred or processed may include one or more of sensor data, flow measurements, command signals, data retrievals, data writes, setting adjustments, and/or the like.

While system 1000 has been described in the context of a transmitter for a sensor, it should be understood that embodiments of the interference fit standard barrier 199 may be used in any implement that has internal electronic elements. This may include implements that are not configured to communicate with any other external electronic element (e.g. not configured to communicate with device 1004 and/or network 1008).

## Claims

1. An assembly (100, 200) with an interference fit standard barrier (199) forming an explosion proof and/or flame proof barriers certified to satisfy Ex d and/or Ex e International technical Commission standards comprising:
an aperture (104) in an element and
a barrier member (102) comprising;
a first face (120);
a second face (122);
a peripheral edge (124) between the first face (120) and the second face (122), the peripheral edge (124) being at least partially angled by an angle (128) relative to a barrier reference line (130) that is perpendicular to both of at least part of the first face (120) and at least part of the second face (122), the angle (128) declining from the first face (120) to the second face (122); and
an interior channel (126) extending through a member depth (123) of the barrier member (102), the member depth (123) being between the first face (120) and the second face (122); and
wherein the aperture (104) comprises an interior peripheral edge (150) conformal with the peripheral edge (124) of the barrier member (102);
**characterized in that**
the interior channel (126) having a longer length than width in a surface of the first face (120) and a surface of the second face (122), and **in that** the barrier member (122) is composed of a polymer.

2. An assembly (100, 200) as claimed in claim 1, wherein the barrier member (102) is at least partially composed of a fluorocarbon.

3. An assembly (100, 200) as claimed in claim 2, wherein the fluorocarbon is polytetrafluoroethylene (PTFE).

## Patentansprüche

1. Anordnung (100, 200) mit einer Presssitz-Standardbarriere (199), die eine explosionsgeschützte und/oder flammengeschützte Barriere bildet, die gemäß den Normen Ex d und/oder Ex e der Internationalen Technischen Kommission zertifiziert ist, umfassend:
eine Öffnung (104) in einem Element und
ein Barriereelement (102), umfassend:
eine erste Fläche (120);
eine zweite Fläche (122);
eine Umfangskante (124) zwischen der ersten Fläche (120) und der zweiten Fläche (122), wobei die Umfangskante (124) mindestens teilweise in einem Winkel (128) relativ zu einer Barriere-Referenzlinie (130) abgewinkelt ist, die senkrecht zu mindestens einem Teil der ersten Fläche (120) und mindestens einem Teil der zweiten Fläche (122) steht, wobei der Winkel (128) von der ersten Fläche (120) zur zweiten Fläche (122) abfällt; und
einen inneren Kanal (126), der sich durch eine Elementtiefe (123) des Barriereelements (102) erstreckt, wobei die Elementtiefe (123) zwischen der ersten Fläche (120) und der zweiten Fläche (122) liegt; und
wobei die Öffnung (104) eine innere Umfangskante (150) umfasst, die mit der Umfangskante (124) des Barriereelements (102) konform ist;
**dadurch gekennzeichnet, dass**
der innere Kanal (126) in einer Fläche der ersten Fläche (120) und einer Fläche der zweiten Fläche (122) eine Länge aufweist, die größer ist als seine Breite, und dass das Barriereelement (122) aus einem Polymer besteht.

2. Anordnung (100, 200) nach Anspruch 1, wobei das Barriereelement (102) mindestens teilweise aus einem Fluorkohlenstoff besteht.

3. Anordnung (100.200) nach Anspruch 2, wobei der Fluorkohlenstoff Polytetrafluorethylen (PTFE) ist.

## Revendications

1. Ensemble (100, 200) avec une barrière standard à ajustement serré (199) formant une barrière antidéflagrante et/ou pare-flamme certifiée pour satisfaire aux normes Ex d et/ou Ex e de la Commission technique internationale, comprenant :
une ouverture (104) dans un élément ; et
un élément barrière (102) comprenant :
une première face (120) ;
une seconde face (122) ;
un bord périphérique (124) entre la première face (120) et la seconde face (122), le bord périphérique (124) étant au moins en partie incliné d'un angle (128) par rapport à une ligne de référence de barrière (130) qui est perpendiculaire à la fois à au moins une partie de la première face (120) et à au moins une partie de la seconde face (122), l'angle (128) diminuant de la première face (120) vers la seconde face (122) ; et
un canal intérieur (126) s'étendant sur une profondeur d'élément (123) de l'élément barrière (102), la profondeur d'élément (123) étant entre la première face (120) et la seconde face (122) ; et
l'ouverture (104) comprenant un bord périphérique intérieur (150) conforme au bord périphérique (124) de l'élément barrière (102) ;
l'ensemble étant **caractérisé en ce que** le canal intérieur (126) possède une longueur supérieure à une largeur dans une surface de la première face (120) et une surface de la seconde face (122), et **en ce que** l'élément barrière (122) est composé d'un polymère.

2. Ensemble (100, 200) selon la revendication 1, l'élément barrière (102) étant au moins en partie composé d'un fluorocarbone.

3. Ensemble (100, 200) selon la revendication 2, le fluorocarbone étant du polytétrafluoroéthylène (PTFE).
